# NEW EUROPEAN PATENT SPECIFICATION

(11) **EP 1 975 054 B2**
(45) Date of publication and mention of the opposition decision: **29.07.2015**
(45) Mention of the grant of the patent: 30.05.2012
(21) Application number: 08003305.3
(22) Date of filing: 22.02.2008
(51) Int. Cl.: B62K 19/34, B62M 3/00

(54) **Bicycle bottom bracket hanger**
Fahrrad Tretlager
Pédalier de bicyclette

(30) Priority: 29.03.2007 US 692953
(43) Date of publication of application: 01.10.2008
(73) Proprietor: SHIMANO INC., Osaka 590-8577 (JP)
(72) Inventor: Yamanaka, Masahiro, Sakai City Osaka 590-8577 (JP)
(74) Representative: Grosse Schumacher Knauer von Hirschhausen

(56) References cited:
- EP-A- 1 314 902
- EP-A- 1 661 802
- EP-A- 1 759 981
- DE-A1- 3 231 138
- US-A- 1 622 483
- US-A- 2 257 401
- US-A- 4 252 384
- US-A- 5 575 540
- US-A1- 2002 096 015

## Description

### BACKGROUND OF THE INVENTION

### Field of the Invention

This invention generally relates to a bicycle bottom bracket hanger of a bicycle frame. More specifically, the present invention relates to a tubular hanger part of the bottom bracket hanger that is configured control the ingress of water into the bottom bracket hanger from a part of the bicycle frame, e.g. from a seat post.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle frame.

Generally speaking, a conventional bicycle has a diamond-shaped frame formed of a plurality of tubes. The tubes of the frame typically include a top tube, a down tube, a head tube, a seat tube, a pair of seat stays, a pair of chain stays and a cylindrical or tubular hanger part. The tubes of the frame are fixedly coupled together to form a front triangularly shaped part and a rear triangularly shaped part that is arranged rearward of the front triangularly shaped part. The front and rear triangularly shaped parts serve as the framework of the bicycle body. A front fork is pivotally supported on the front triangularly shaped part such that the front fork can rotate freely about an axis that is tilted slightly from vertical.

The cylindrical or tubular hanger part of the frame is often called a bicycle bottom bracket hanger because it supports a bottom bracket assembly. Many different types of bottom bracket assembly are currently available on the market. Generally speaking, a conventional bicycle bottom bracket has a pair of bearings mounted into a bottom bracket shell or tubular hanger part of a bicycle frame for rotatably supporting a crank axle.

Sometimes water could intrude into the tubular hanger part of a bicycle frame via e.g. the seat tube or the down tube. In order to prevent such water from intruding near to a bearing of a bottom bracket assembly, some bicycle bottom bracket assemblies are provided with a drain water feature for draining water from a tubular hanger part of a bicycle frame. One such conventional drain water feature for bicycle bottom bracket assembly includes providing a notch in the bottom bracket shell or tubular hanger part of the bicycle frame to drain any water that has intruded into the tubular hanger part of the bottom bracket assembly. Another example of a conventional bottom bracket assembly with a drain water feature is disclosed in European Patent Publication No. 1 314 902 A1. In this publication, the bottom bracket assembly is provided with an adjustable tube to drain any water that has intruded into the tubular hanger part of the bottom bracket assembly.

Some other examples of bicycle frames with conventional bottom bracket hangers are disclosed in U.S. Patent Application No. 11/438,212 and U.S. Patent No. 6,983,672 B2.

Document EP 1 314 902 A shows a bicycle bottom bracket hanger according to the preamble of claim 1 comprising a tubular hanger part, adapter members to receive bearing units, an inner tubular member, and a sealing arrangement arranged between each of the adapter members and the tubular member. The tubular hanger part is contacting the sealing arrangement. When the adapter and the bearings are disassembled from the tubular hanger part, the tubular member will disengage from the adapter members. In this case water which had pooled in the space between the hanger part and the tubular member will escape, and will wet the bearings.

In view of the above, it will be apparent to those skilled in the art from this disclosure that there exists a need for an improved bicycle bottom bracket hanger. This invention addresses this need in the art as well as other needs, which will become apparent to those skilled in the art from this disclosure.

### SUMMARY OF THE INVENTION

One object of the present invention is to provide a bicycle bottom bracket hanger that limits the ingress of water into the bottom bracket hanger from a part of the bicycle frame, e.g. from a seat post.

Another object of the present invention is to provide a bicycle bottom bracket hanger that is relatively inexpensive to manufacture.

The foregoing objects can basically be attained by providing a bicycle bottom bracket hanger that is basically comprises a tubular hanger part, an inner tubular member and sealing arrangement comprising sealing members. The tubular hanger part includes an interior surface with a first open end and a second open end that is axially spaced from the first open end. The inner tubular member is coaxially disposed in the tubular hanger part between the first and second open ends of the tubular hanger part. The sealing arrangement is disposed between the tubular hanger part and the inner tubular member. The sealing arrangement is entirely disposed within the tubular hanger part between the first and second open ends of the tubular hanger part.

The tubular hanger part includes a tubular member mounting portion formed on the interior surface of the tubular hanger part, and the tubular member mounting portion contacts the sealing members of the sealing arrangement.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is an overall right side elevational view of a bicycle frame equipped with a bicycle bottom bracket hanger in accordance with one embodiment of the present invention;
Figure 2 is an enlarged, partial perspective view of the tubular hanger part of the bicycle frame illustrated Figure 1 with the bottom bracket installed in the tubular hanger part in accordance with the illustrated embodiment of the present invention;
Figure 3 is an exploded perspective view of the bicycle bottom bracket hanger with the parts of the bottom bracket exploded out of the tubular hanger part of the bicycle frame in accordance with the illustrated embodiment of the present invention;

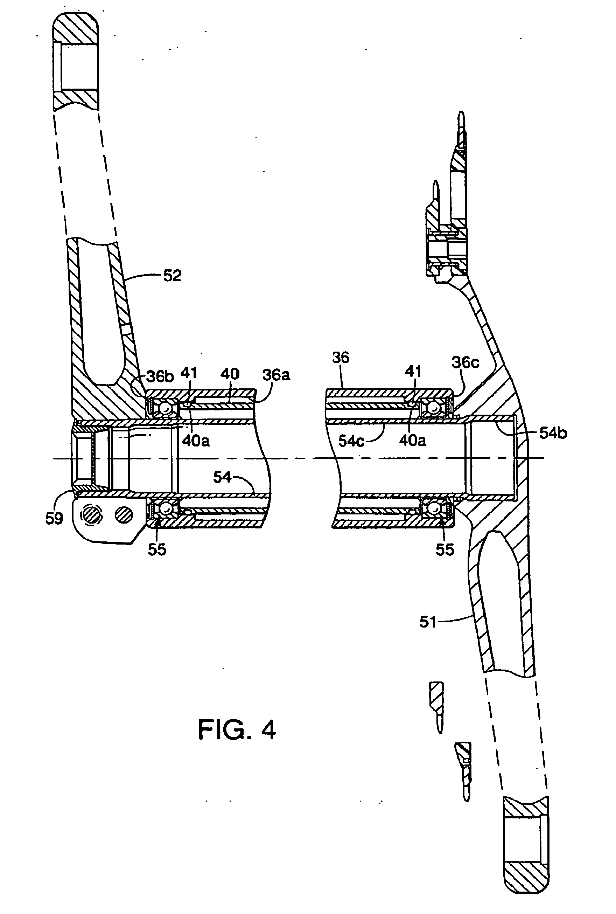

Figure 4 is a transverse cross sectional view of the bicycle bottom bracket hanger and the bicycle bottom bracket in accordance with the illustrated embodiment of the present invention; and

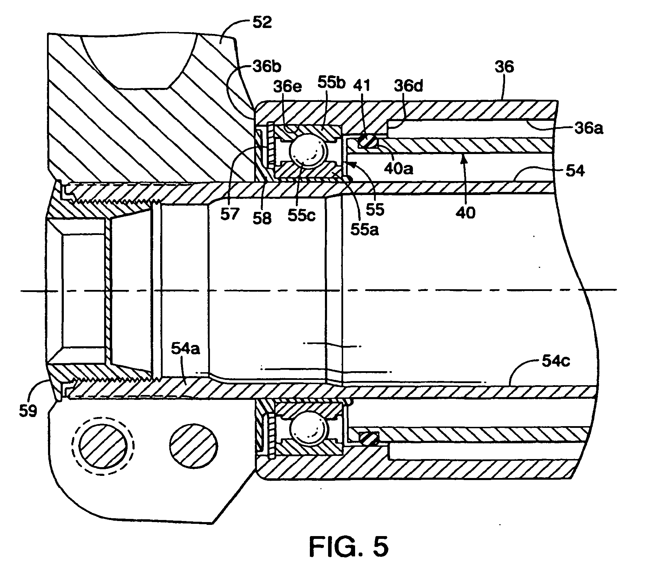

Figure 5 is an enlarged, partial transverse cross sectional view of one end of the bicycle bottom bracket hanger showing the tubular hanger part with the bottom bracket installed therein in accordance with the illustrated embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

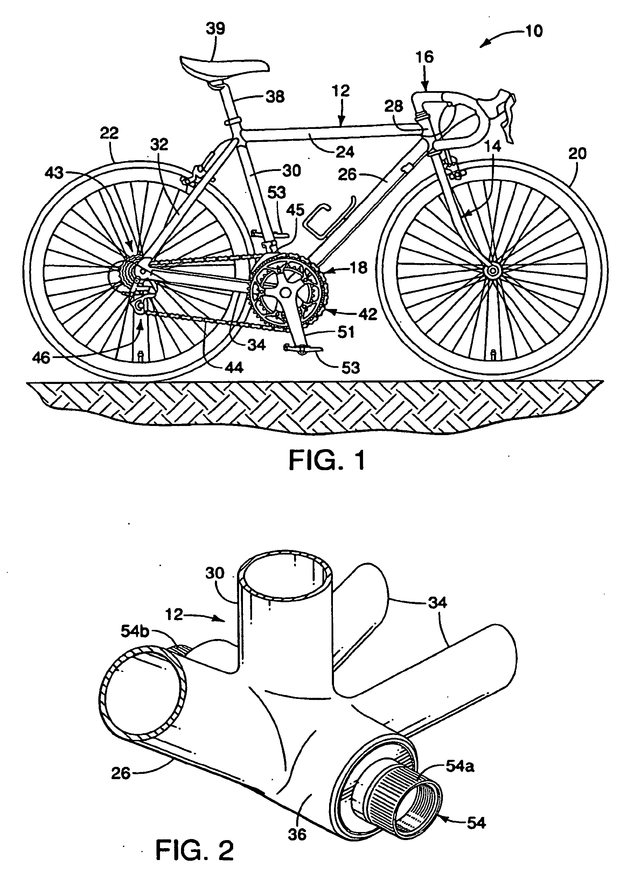

Referring initially to Figure 1, a bicycle 10 is illustrated that incorporates one embodiment of the present invention. In this example, the bicycle 10 is a road bike that has a diamond-shaped bicycle frame 12 with a triangularly shaped front triangle and a triangularly shaped rear triangle that is arranged rearward of the front triangle. The bicycle frame 12 serves as the framework of the bicycle body. The bicycle frame 12 has a front fork 14 pivotally supported on a front part of the bicycle frame 12 such that the front fork 14 can rotate freely about an axis that is tilted slightly from vertical. The lower or bottom part of the front fork 14 is divided into two prongs. The bicycle 10 is also provided with a drop-type handlebar unit 16 connected to the front fork 14, and a drive unit 18 provided on a lower part of the bicycle frame 12. The drive unit 18 is configured to convert pedaling force into driving force. A front wheel 20 is supported in a freely rotatable manner on the bottom end of the front fork 14, while a rear wheel 22 is supported in a freely rotatable manner on a rear part of the bicycle frame 12. Of course, the bicycle 10 can include other components as needed and/or desired.

As seen in Figures 1 and 2, the bicycle frame 12 is basically formed by a top tube 24, a down tube 26, a head tube 28, a seat tube 30, a pair of seat stays 32, a pair of chain stays 34 and a tubular hanger part 36. The top tube 24 is arranged generally horizontally, while the down tube 26 is arranged below the top tube 24 such that it slants obliquely upward toward the front. The head tube 28 joins the front ends of the top tube 24 and the down tube 26 together. The seat tube 30 extends diagonally upward and joins the rear ends of the top tube 24 and the down tube 26 together. The tubular hanger part 36 (shown in Figure 2) forms a connection portion where the seat tube 30 and the down tube 26 are joined together.

The bicycle 10 is also provided with a seat post 38 has a saddle or seat 39 fastened thereto. The seat post 38 is secured in the seat tube 30 such that its position can be vertically adjusted up and down.

The tubular hanger part 36 of the bicycle frame 12 has an inner tubular member 40 with a sealing arrangement formed by a pair of sealing members 41. The inner tubular member 40 is frictionally attached to the tubular hanger part 36 by the sealing members 41 to prevent the intrusion of water past the inner tubular member 40.

The tubular hanger part 36 includes an interior surface 36a with a first open end 36b and a second open end 36c that is axially spaced from the first open end 36b. The inner tubular member 40 is coaxially disposed in the tubular hanger part 36 and spaced inwardly from the first and second open ends 36b and 36c of the tubular hanger part 36. The sealing members 41 of the sealing arrangement are disposed between the tubular hanger part 36 and the inner tubular member 40 to seal an interface between the tubular hanger part 36 and the inner tubular member 40 at two axially spaced apart positions. Thus, the sealing arrangement is entirely disposed within the tubular hanger part 36 between the first and second open ends 36b and 36c of the tubular hanger part 36.

The tubular hanger part 36 includes a tubular member mounting portion 36d formed on the interior surface 36a of the tubular hanger part 36 and contacting the sealing members 41 of the sealing arrangement. The tubular mounting portion 36d is preferably formed by first and second annular projections. The first annular projection of the tubular mounting portion 36d extends radially inwardly from the interior surface 36a of the tubular hanger part 36 adjacent the first open end 36b of the tubular hanger part 36. The second annular projection 36d of the tubular mounting portion 36d extends radially inwardly from the interior surface 36a of the tubular hanger part 36 adjacent the second open end 36c of the tubular hanger part 36.

The interior surface 36a of the tubular hanger part 36 includes first and second bearing mounting portions 36e. The first and second bearing mounting portions are disposed axially outwardly from the ends of the inner tubular member 40 and adjacent the first and second open ends 36b and 36c of the tubular hanger part 36, respectively.

The inner tubular member 40 has first and second sealing member mounting portions 40a disposed adjacent the first and second open ends 36b and 36c of the tubular hanger part 36, respectively. Preferably, the first and second sealing member mounting portions 40a are annular recesses with the sealing members 41 disposed therein. The sealing members 41 of the sealing arrangement are preferably first and second O-rings disposed in the annular recesses (sealing member mounting portions 40a). Thus, the sealing members (O-rings) 41 are mounted to the first and sealing member mounting portions 40a of the inner tubular member 40.

The drive unit 18 basically includes a front crankset 42, a rear gear cassette unit 43, a chain 44, a front derailleur 45, and a rear derailleur 46. The front crankset 42 is provided on the bottom bracket of the bicycle 10, which is at least partially formed by the tubular hanger part 36 as discussed above. The rear gear cassette unit 43 is mounted in a non-rotatable manner to the free hub of the rear wheel 22. The chain 44 is arranged on the front crankset 42 and the rear gear cassette unit 43 so as to span therebetween. The front derailleur 45 and the rear derailleur 46 function as gear changing devices.

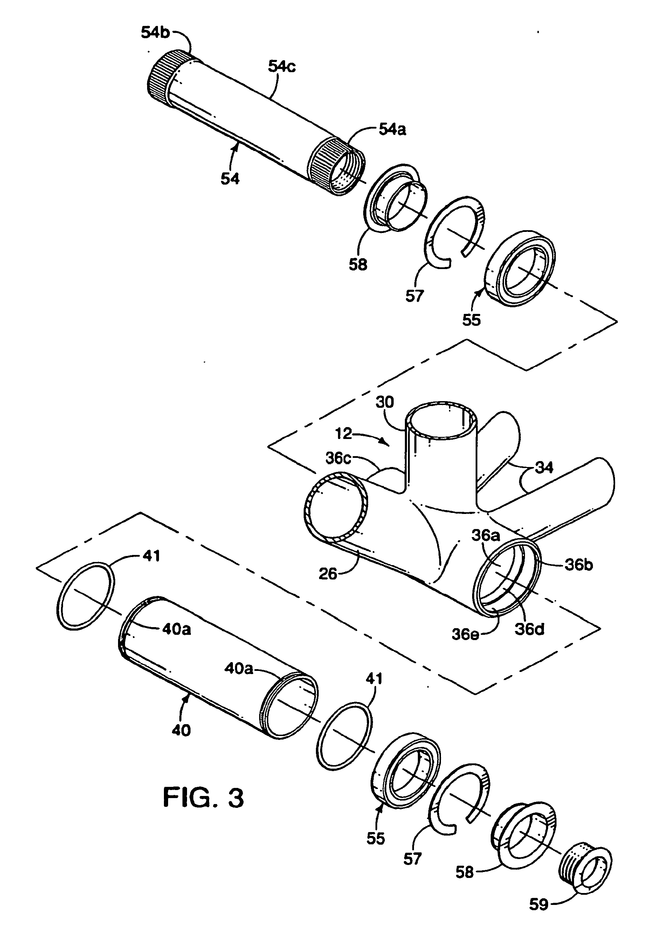

As shown in Figures 1 and 3, the front crankset 42 basically includes a right crank arm 51, a left crank arm 52, a pair of pedals 53 (Figure 1), a crank axle 54 and pair (left and right) of bearing units 55. The crank axle 54 is rotatably supported on the hanger part 36 of the frame 12 by the bearing units 55 that are retained on the crank axle 54 by a pair of C-shaped retaining clips 57, respectively. Each of the bearing units 55 preferably includes a carrier member 58 for installing the bearing units 55 on the crank axle 54. The carrier members 58 are non-metallic members that are preferably made of a plastic material such as polyoxymethylene (POM). The right and left crank arms 51 and 52 are preferably fixedly coupled to the right and left ends of the crank axle 54, respectively.

The crank axle 54 is preferably a rod shaped member that is highly rigid such as chrome molybdenum steel. The crank axle 54 can be either a solid member or a hollow pipe-shaped as need and/or desired. The crank axle 54 has a first axial end portion 54a, a second axial end portion 54b and a central portion 54c. The first axial end portion 54a is disposed on a first axial side of the central portion 54c, while the second axial end portion 54b is disposed on a second axial side of the central portion 54c. In the illustrated embodiment, both of the axial end portions 54a and 54b are have splines for mating with the left and right crank arms 52 and 51, respectively. The right crank arm 51 is crimped onto the second axial end portion 54b, while a nut 59 is threaded into the first axial end portion 54a of the crank axle 54 to secure the left crank arm 52 to the first axial end portion 54a of the crank axle 54. Of course, the crank axle 54 can be attached to the right and left crank arms 51 and 52 in other ways as needed and/or desired.

Each of the bearing units 55 include an inner ring or race 55a and an outer ring or race 55b with a plurality of rolling members (i.e. ball bearings) 55c disposed therebetween. The bearing units 55 are preferably conventional sealed industrial bearings where seals are mounted between the inner and outer rings 55a and 55b, respectively, and grease is inserted in the bearing units 55 in advance. Therefore, maintenance of the bearing units 55 for lubrication can be omitted.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle bottom bracket hanger comprising:
a tubular hanger part (36) including an interior surface (36a) with a first open end (36b) and
a second open end (36c) that is axially spaced from the first open end (36b);
an inner tubular member (40) coaxially disposed in the tubular hanger part (36) between the first and second open ends (36b, 36c) of the tubular hanger part (36); and
a sealing arrangement formed by a pair of sealing members (41) and disposed between the tubular hanger part (36) and the inner tubular member (40), with the sealing arrangement being entirely disposed within the tubular hanger part (36) between the first and second open ends (36b, 36c) of the tubular hanger part (36),
the inner tubular member (40) having a first sealing member mounting portion (40a) disposed adjacent the first open end (36b) of the tubular hanger part (36) and a second sealing member mounting portion (40a) disposed adjacent the second open end (36c) of the tubular hanger part (36); and
the sealing members (41) being mounted to the first and second sealing member mounting portions (40a) of the inner tubular member (40),
**characterized in that** the tubular hanger part (36) includes a tubular member mounting portion (36d) formed on the interior surface (36a) of the tubular hanger part (36) and
contacting the sealing members (41) of the sealing arrangement.

2. The bicycle bottom bracket hanger according to claim 1, wherein
the tubular member mounting portion (36d) is a first annular projection extending radially inwardly from the interior surface (36a) of the hanger part adjacent the first open end (36b) of the tubular hanger part (36), and a second annular projection extending radially inwardly from the interior surface (36a) of the hanger part adjacent the second open end (36c) of the tubular hanger part (36).

3. The bicycle bottom bracket hanger according to claim 2, wherein
the interior surface (36a) of the tubular hanger part (36) includes a first bearing mounting portion (36e) disposed axially outwardly from the inner tubular member (40) and adjacent the first open end (36b) of the tubular hanger part (36), and a second bearing mounting portion (36e) disposed axially outwardly from the inner tubular member (40) and adjacent the second open end (36c) of the tubular hanger part (36).

4. The bicycle bottom bracket hanger according to claim 1, wherein
the sealing arrangement includes a first O-ring mounted to the first sealing member mounting portion (40a) of the inner tubular member (40), and a second O-ring mounted to the second sealing member mounting portion (40a) of the inner tubular member (40).

## Patentansprüche

1. Fahrradtretlageraufnahme, aufweisend:
einen rohrförmigen Aufnahmeteil (36), der eine Innenfläche (36a) mit einem ersten offenen Ende (36b) und einem zweiten offenen Ende (36c) beinhaltet, das axial beabstandet vom ersten offenen Ende (36b) angeordnet ist;
ein inneres rohrförmiges Element (40), das koaxial im rohrförmigen Aufnahmeteil (36) zwischen den ersten und zweiten offenen Enden (36b, 36c) des rohrförmigen Aufnahmeteils (36) angeordnet ist; und
eine Dichtungsanordnung, die durch ein Paar von Dichtungselementen (41) gebildet ist und zwischen dem rohrförmigen Aufnahmeteil (36) und dem inneren rohrförmigen Element (40) angeordnet ist, wobei die Dichtungsanordnung vollständig innerhalb des rohrförmigen Aufnahmeteils (36) zwischen den ersten und zweiten offenen Enden (36b, 36c) des rohrförmigen Aufnahmeteils (36) angeordnet ist,
wobei das innere rohrförmige Element (40) einen ersten Dichtungselement-Befestigungsabschnitt (40a), der benachbart dem ersten offenen Ende (36b) des rohrförmigen Aufnahmeteils (36) angeordnet ist, und einen zweiten Dichtungselement-Befestigungsabschnitt (40a) aufweist, der benachbart dem zweiten offenen Ende (36c) des rohrförmigen Aufnahmeteils (36) angeordnet ist; und
die Dichtungselemente (41) an den ersten und zweiten Dichtungselement-Befestigungsabschnitten (40a) des inneren rohrförmigen Elementes (40) montiert sind,
**dadurch gekennzeichnet, dass** der rohrförmige Aufnahmeteil (36) einen Rohrelement-Befestigungsabschnitt (36d) beinhaltet, der auf der Innenfläche (36a) des rohrförmigen Aufnahmeteils (36) ausgebildet ist und mit den Dichtungselementen (41) der Dichtungsanordnung in Kontakt ist.

2. Fahrradtretlageraufnahme nach Anspruch 1, wobei
der Rohrelement-Befestigungsabschnitt (36d) ein erster ringförmiger Vorsprung, der sich radial nach innen von der Innenfläche (36a) des Aufnahmeteils benachbart dem ersten offenen Ende (36b) des rohrförmigen Aufnahmeteils (36) erstreckt, und ein zweiter ringförmiger Vorsprung ist, der sich radial nach innen von der Innenfläche (36a) des Aufnahmeteils benachbart dem zweiten offenen Ende (36c) des rohrförmigen Aufnahmeteils (36) erstreckt.

3. Fahrradtretlageraufnahme nach Anspruch 2, wobei
die Innenfläche (36a) des rohrförmigen Aufnahmeteils (36) einen ersten Lagerbefestigungsabschnitt (36e), der axial außerhalb vom inneren rohrförmigen Element (40) und benachbart dem ersten offenen Ende (36b) des rohrförmigen Aufnahmeteils (36) angeordnet ist, und einen zweiten Lagerbefestigungsabschnitt (36e) beinhaltet, der axial außerhalb vom inneren rohrförmigen Element (40) und benachbart dem zweiten offenen Ende (36c) des rohrförmigen Aufnahmeteils (36) angeordnet ist.

4. Fahrradtretlageraufnahme nach Anspruch 1, wobei
die Dichtungsanordnung einen ersten O-Ring, der am ersten Dichtungselement-Befestigungsabschnitt (40a) des inneren rohrförmigen Elementes (40) montiert ist, und einen zweiten O-Ring beinhaltet, der am zweiten Dichtungselement-Befestigungsabschnitt (40a) des inneren rohrförmigen Elementes (40) montiert ist.

## Revendications

1. Support de braquet inférieur de bicyclette comprenant :
une partie de support tubulaire (36) comprenant une surface intérieure (36a) avec une première extrémité ouverte (36b) et une deuxième extrémité ouverte (36c) qui est axialement éloignée de la première extrémité ouverte (36b) ;
un élément tubulaire intérieur (40) disposé de manière coaxiale dans la partie de support tubulaire (36) entre les première et deuxième extrémités ouvertes (36b, 36c) de la partie de support tubulaire (36) ; et
un agencement d'étanchéité formé par une paire d'éléments d'étanchéité (41) et disposé entre la partie de support tubulaire (36) et l'élément tubulaire intérieur (40), avec l'agencement d'étanchéité étant complètement disposé à l'intérieur de la partie de support tubulaire (36) entre les première et deuxième extrémités ouvertes (36b, 36c) de la partie de support tubulaire (36),
l'élément tubulaire intérieur (40) a une première portion de montage d'élément d'étanchéité (40a) disposée de manière adjacente à la première extrémité ouverte (36b) de la partie de support tubulaire (36) et une deuxième portion de montage d'élément d'étanchéité (40a) disposée de manière adjacente à la deuxième extrémité ouverte (36c) de la partie de support tubulaire (36) ; et
les éléments d'étanchéité (41) étant montés sur les première et deuxième portion de montage d'élément d'étanchéité (40a) de l'élément tubulaire intérieur (40),
**caractérisé en ce que** la partie de support tubulaire (36) comprend une portion de montage d'élément tubulaire (36d) formée sur la surface intérieure (36a) de la partie de support tubulaire (36) et étant en contact avec les éléments d'étanchéité (41) de l'agencement d'étanchéité.

2. Support de braquet inférieur de bicyclette selon la revendication 1, dans lequel :
la portion de montage d'élément tubulaire (36d) est une première saillie annulaire s'étendant radialement vers l'intérieur à partir de la surface intérieure (36a) de la partie de support adjacente à la première extrémité ouverte (36b) de la partie de support tubulaire (36), et une deuxième saillie annulaire s'étendant radialement vers l'intérieur à partir de la surface intérieure (36a) de la partie de support adjacente à la deuxième extrémité ouverte (36c) de la partie de support tubulaire (36).

3. Support de braquet inférieur de bicyclette selon la revendication 2, dans lequel :
la surface intérieure (36a) de la partie de support tubulaire (36) comprend une première portion de montage de palier (36e) disposée axialement vers l'extérieur à partir de l'élément tubulaire intérieur (40) et adjacente à la première extrémité ouverte (36b) de la partie de support tubulaire (36), et une deuxième partie de montage de palier (36e) disposée axialement vers l'extérieur à partir de l'élément tubulaire interne (40) et adjacente à la deuxième extrémité ouverte (36c) de la partie de support tubulaire (36).

4. Support de braquet inférieur de bicyclette selon la revendication 1, dans lequel :
l'agencement d'étanchéité comprend un premier joint torique monté sur la première portion de montage d'élément d'étanchéité (40a) de l'élément tubulaire intérieur (40), et un deuxième joint torique monté sur la deuxième portion de montage d'élément d'étanchéité (40a) de l'élément tubulaire intérieur (40).
